# EUROPEAN PATENT APPLICATION

(11) **EP 0 701 074 A1**
(43) Date of publication of application: **13.03.1996**
(21) Application number: 95306034.0
(22) Date of filing: 30.08.1995
(51) Int. Cl.: F16J 15/34

(54) **Seal assembly with secondary seal**

(30) Priority: 08.09.1994 US 303169
(71) Applicant: KAYDON CORPORATION, Muskegon, Michigan 49443 (US)
(72) Inventor: Mosley, William Kelvin, Rosedale, Maryland 21237 (US); Haynes, George Perry, Jr., Baltimore, Maryland 21220 (US)
(74) Representative: Maggs, Michael Norman

(57) **Abstract**

A dry gas seal for pumps, compressors and the like includes a face seal housing (20), a shoulder retainer (22), a shoulder (24) which is attached to the retainer (22) and a face seal ring (28) locked to the face seal housing (20). A spring (30) urges the face seal ring (28) into sealing engagement with the radially extending face of the shoulder (24). A secondary seal assembly (80) is positioned between the face seal ring (28) and the face seal housing (20). The secondary seal assembly (80) includes an inner, one-piece annular split ring (86) having ends (102,104) which define an overlapping step joint. The inner annular split ring (86) includes an inner circumferential surface (100) in sealing engagement with the face seal housing (20). An outer split ring (84) has an inner circumferential surface (90) in engagement with the outer circumferential surface (98) of the inner ring. The inner and outer rings (86,84) define radially extending faces (124,122) in sealing engagement with the face seal ring (28).

## Description

The present invention relates to seal assemblies, more particularly to rotary mechanical seals and, more particularly still, to gas face seals.

Rotary mechanical seals are used in a wide variety of devices including blowers, compressors, vacuum pumps and expanders. The seals provide a barrier between the gas working chamber and the external environment or atmosphere. The seals minimize loss of working fluid to the environment. Gas face seals are positioned at the interface or penetration of the rotating shaft of the devices with a stationary working chamber or housing. Mechanical seals may be of the circumferential or face type.

A wide variety of face seals have heretofore been proposed. These seals generally include a shoulder or sealing element fixed for rotation with the shaft. A non-rotating seal element or face seal ring is supported on the housing and restrained so as to be non-rotatable. The shoulder and face seal ring define opposed sealing surfaces. Springs urge the surfaces toward one another. Operation of such seals requires that a small but finite gap or separation be maintained between the opposed sealing surfaces. The finite gap is achieved by a combination of hydrostatic and hydrodynamic gas forces. Examples of gas face seals may be found in U.S. Patent No. 3,499,653 entitled **ROTARY MECHANICAL SEAL OF THE GAP TYPE**, which issued on March 10, 1970, to Gardner and in commonly owned U.S. Patent No. 5,066,026 entitled **GAS FACE SEAL**, which issued on November 19, 1991, to Heck et al.

Typically, gas face seals have included elastomer, O-ring secondary seals. Such secondary seals have limited the applications for the face seals. In high temperature and/or high pressure compressor and pump applications, the O-ring secondary seals may fail as a result of compression set, slip/stick friction and explosive decompression. Elastomeric O-rings are gas permeable and, hence, are susceptible to failure due to explosive decompression. The O-ring secondaries may lose the lubrication that was applied to lower frictional forces at installation the longer they are in service. This loss of lubrication increases the frictional drag on the primary seal formed by the shoulder and face seal ring which results in higher leakage rates at the seal assembly. Elastomeric O-ring friction is also highly dependent on the surface finish. As the finish gets rougher, the frictional drag increases. The use of O-rings requires that clearances between the main dry gas seal and all mating components be properly set during manufacture and assembly. Failure to maintain the clearances within tolerances may result in spiral extrusion of the O-rings through the resulting clearance space. In addition, elastomeric O-rings have limited operating temperatures, typically, only up to 200°C (400°F).

A need exists for an improved dry gas seal including a secondary seal assembly which would permit the use of a dry gas seal in pumps and compressors which have high pressure and/or high temperature operating environments.

According to the present invention there is provided a seal assembly for sealing the interface between a rotating shaft and a main housing, said assembly comprising:
a face seal housing adapted to be secured to said main housing;
a shoulder retainer adapted to be secured to the rotating shaft;
a shoulder having a radially extending face, said shoulder being secured to said shoulder retainer for rotation therewith;
a face seal ring locked to said face seal housing for axial movement toward and away from said shoulder;
resiliently biasing means engaging said face seal ring for resiliently biasing said face seal ring toward said shoulder; characterised by
a secondary seal assembly between said face seal ring and said face seal housing, said secondary seal assembly including an inner, one-piece, split ring having an inner circumferential surface in engagement with said face seal housing and an outer split ring having an inner circumferential surface in engagement with an outer circumferential surface of said inner ring.

In accordance with the present invention, the aforementioned need is fulfilled. In a preferred arrangement a pump and compressor dry gas seal assembly includes an annular shoulder and an opposed annular face seal ring and a secondary seal assembly is provided which seals against the back of the primary or face seal ring.

In the preferred form, the secondary seal includes an annular, split ring having opposed ends which define a step joint. An outer split ring has an inner circumferential surface engaging an outer circumferential surface of the inner split ring. The outer ring controls the tension of the assembly and maintains the inner split ring in sealing engagement. In the preferred form, the inner split ring is fabricated from pure 10225 carbon. The dry gas seal and secondary seal assembly in accordance with the present invention provides a positive seal at the bore or inner circumference of the secondary seal. The secondary seal defines a radially extending face which is seated against the back of the primary, face seal ring. The joint defined by the ends of the inner split ring provides a positive seal. The assembly does not absorb gas and will not fail due to decompression. The split ring secondary seal does not need lubrication for installation. The secondary seal has a higher band of surface finish values within which it can operate. Frictional drag on the primary or main seal, which would result in leakage, is reduced or eliminated. Extrusion of the secondary seal material is eliminated. The face seal can operate at temperatures as high as 650°C (1200°F). The seal in accordance with the present invention provides increased reliability in use, reduced maintenance and permits an increase in operating pressures and temperatures.

An embodiment of the invention will now be described by way of example with reference to the drawings, of which
Fig. 1 is a fragmentary, radial, cross-sectional view through a gas face seal in accordance with the present invention;
Fig. 2 is a perspective view of the secondary seal assembly incorporated in the seal of Fig. 1;
Fig. 3 is an enlarged, fragmentary, plan view of the joint defined by the inner split ring incorporated in the secondary seal of Fig. 2;
Fig. 4 is a cross-sectional view taken generally along line IV-IV of Fig. 3;
Fig. 5 is a cross-sectional view taken generally along line V-V of Fig. 3; and
Fig. 6 is a cross-sectional view of the outer split ring incorporated in the secondary seal assembly of Fig. 2.

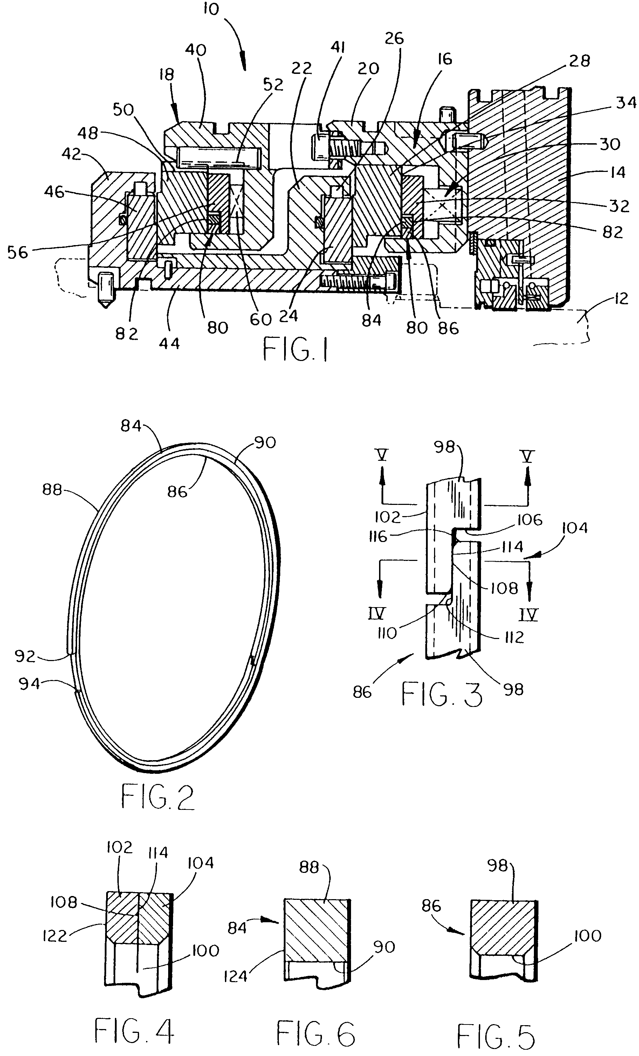

A seal assembly in accordance with the present invention is illustrated in Fig. 1 and generally designated by the numeral 10. Assembly 10 provides a seal where a shaft 12 penetrates a housing component 14 of a pump or compressor. Assembly 10 includes a pair of dry gas face seals 16, 18. Face seal 16 includes a face seal housing 20 and a shoulder retainer 22. An annular shoulder 24 is secured to shoulder retainer 22 by a key 26. A face seal ring 28 is mounted on housing 20. Face seal ring 28 is locked against rotation. The seal may, however, move axially toward and away from shoulder 24. A plurality of compression springs 30, supported within housing 20, engage an annular follower 32. Springs 30 resiliently bias the follower into engagement with a rear face 34 of face seal ring 28. Shoulder 24 and ring 28 define seal faces biased toward each other.

Dry gas seal 18 is of the same construction. Seal 18 includes a seal housing 40 secured to housing 20 by a plurality of fasteners 41. A shoulder retainer 42 is secured to shaft 12 for rotation therewith. Retainer 22 of seal subassembly 16 is, in turn, fixed to an elongated cylindrical portion 44 of shoulder retainer 42. A shoulder 46 is carried by shoulder retainer 42. Another face seal ring 48 is locked to housing 18. Rings 48 and 28 each define a plurality of lock pin recesses 50. Lock pins 52, carried by their respective face seal housing, extend into the recesses. As a result, the face seal rings are mounted for axial movement toward and away from their respective shoulders or rotating seal elements. Seal assembly 18 further includes a follower 56 resiliently biased into engagement with a rear face of face seal ring 48 by a compression spring 60. The dual dry gas face seal subassembly described above and illustrated in Fig. 1 is substantially in accordance with the disclosure of commonly owned U.S. Patent No. 5,066,026, which is hereby incorporated by reference.

In accordance with the present invention, elastomeric O-ring secondary seals as found, for example, in the seal of U.S. Patent No. 5,066,026 are eliminated. Split ring secondary seal subassemblies 80 are substituted therefor. Followers 32, 56 of the dry gas face seals 16, 18 each define an inwardly and outwardly opening groove or inner circumferential notch 82. Each subassembly 80 is a contracting, two-piece sealing ring subassembly. Subassemblies 80 include an outer ring 84 and an inner ring 86 positioned within groove 82 of each follower. Outer ring 84, as seen in Figs. 1 and 2, is an annular ring having a generally square or rectangular cross section. Outer ring 84 includes an outer circumferential surface 88, an inner circumferential surface 90 and opposed, squared ends 92, 94.

Inner ring 86 is a split, annular, piston-type ring. The ring includes an outer circumferential surface 98, an inner circumferential surface 100 and opposed ends 102, 104. Ends 102, 104 define a step joint. End 102 defines a notch 106 having a surface 108 and a beveled end 110. End 104 defines a corresponding notch 112, including a surface 114 and a beveled end 116. The surfaces 108, 114 provide a positive seal at the step joint. As seen in Figs. 1 and 2, seals 80 are initially assembled so that the joint defined by ends 102, 104 of inner ring 86 is 180° apart from the gap defined by ends 92, 94 of outer ring 84. Inner circumferential surface 90 of outer ring 84 engages outer circumferential surface 98 of inner ring 86. Outer ring 84 contracts the inner split ring, resiliently biasing opposed ends 102, 104 of the inner ring toward each other. The outer ring insures that inner circumferential surface 100 has a positive seal with the engaged surface of the face seal housing. The outer ring inner circum-ference, in the free state, is less than the outer circumference of the inner ring. This and the resulting large gap between ends 92, 94 make it easier to manufacture ring 84 and maintain the geometry of the ring.

Rings 84, 86 each define radially extending faces 122, 124. Faces 122, 124 are urged into positive sealing engagement with the outer face of each gas face seal ring. The gas face seal rings and followers form the primary seals. It is presently preferred that outer ring 84 be fabricated from steel. Inner ring 86 is fabricated from carbon. The contracting two-piece assembly should be 100-percent light-tight on the inner ring and 100-percent light-tight between the rings. In order to maintain the desired seal, wall variations in any ring should not exceed 12.7x10⁻³mm (.0005 inches). The split rings are provided with a 125AA surface finish.

The secondary seal eliminates failure problems which would be associated with elastomeric O-rings in high temperature and pressure pump and compressor applications. A positive seal is provided at the bore inner circumferential surface of the secondary seal device. The secondary seal seats against the back of the primary seal ring and is positioned by the follower and compression springs of the primary seal assembly. The steel and carbon secondary seal rings do not absorb gas and will not fail due to explosive decompression. Lubrication is not necessary to lower frictional forces during installation. A higher band of surface finish values within which the assembly can operate is present when compared to an O-ring seal. Since the secondary seal in accordance with the present invention is manufactured from carbon and steel, spiral extrusion problems which could be experienced with O-ring seals are eliminated.

Seal assembly 10 can operate at significantly higher temperatures than prior seal assemblies employing elastomeric O-rings. Temperatures as high as 650°C (1200°F) may be achieved. The advantages of dry gas face seals may now be applied to high temperature and high pressure compressor or pump applications. Increased reliability, reduced cost and reduced maintenance should be achieved.

In view of the above description, those of ordinary skill in the art may envision various modifications to the present invention which would not depart from the inventive concepts disclosed herein. It is expressly intended, therefore, that the above should be considered as only the description of the preferred embodiment. The true spirit and scope of the present invention may be determined by reference to the appended claims.

## Claims

1. A seal assembly for sealing the interface between a rotating shaft (12) and a main housing (14), said assembly comprising:
a face seal housing (20) adapted to be secured to said main housing;
a shoulder retainer (22) adapted to be secured to the rotating shaft;
a shoulder (24) having a radially extending face, said shoulder being secured to said shoulder retainer for rotation therewith;
a face seal ring (28) locked to said face seal housing for axial movement toward and away from said shoulder;
resiliently biasing means (30) engaging said face seal ring for resiliently biasing said face seal ring toward said shoulder; characterised by
a secondary seal assembly (80) between said face seal ring and said face seal housing, said secondary seal assembly including an inner, one-piece, split ring (86) having an inner circumferential surface (100) in engagement with said face seal housing and an outer split ring (84) having an inner circumferential surface (90) in engagement with an outer circumferential surface (98) of said inner ring.

2. An assembly as claimed in claim 1 further including a follower (32) between said biasing means (30) and said face seal ring (28).

3. An assembly as claimed in claim 2 wherein said follower (32) defines an inner circumferential notch (82), said secondary seal assembly (80) being disposed in said notch.

4. An assembly as claimed in any preceding claim wherein said split ring (86) includes ends (102,104) which define a step joint.

5. An assembly as claimed in any preceding claim wherein said outer ring (84) inner circumference in the free state is smaller than the outer circumference of said inner ring.

6. An assembly as claimed in any preceding claim wherein said outer ring has spaced apart, opposed ends (92,94).

7. An assembly as claimed in any preceding claim wherein said inner split ring (86) is fabricated from carbon.

8. An assembly as claimed in any preceding claim wherein said inner and outer rings (86,84) each define a radially extending face (124,122) in engagement with a rear face of said face seal ring (28).
